# EUROPÄISCHE PATENTSCHRIFT

(11) **EP 1 820 600 B1**
(45) Veröffentlichungstag und Bekanntmachung des Hinweises auf die Patenterteilung: **21.01.2009**
(21) Anmeldenummer: 07002991.3
(22) Anmeldetag: 13.02.2007
(51) Int. Cl.: B23Q 1/70, B23Q 1/62

(54) **Bohrspindel für Horizontal- oder Vertikalbearbeitungszentrum mit innenliegendem leistungsverzweigtem Antrieb**
Drill spindle for horizontal or vertical machining centre with an inner branched drive
Broche de perçage pour centre de traitement horizontal ou vertical dotée d'un entraînement intérieur à puissance dérivée

(30) Priorität: 20.02.2006 DE 102006007737
(43) Veröffentlichungstag der Anmeldung: 22.08.2007
(73) Patentinhaber: Werkzeugmaschinenfabrik Adolf Waldrich Coburg GmbH & Co. KG, 96450 Coburg (DE)
(72) Erfinder: Eckstein, Rolf, Dipl.-Ing. (FH), 96472 Rödental (DE)
(74) Vertreter: Hörschler, Wolfram Johannes

(56) Entgegenhaltungen:
- DE-A1- 2 845 968
- DE-U1- 20 307 225
- US-A- 3 469 496

## Beschreibung

Die Erfindung bezieht sich auf eine Bohrspindel, die an Vertikal- oder Horizontalbearbeitungszentren eingesetzt wird und die einen innenliegenden leistungsverzweigten Antrieb aufweist.

### Stand der Technik

Aus der Firmenbroschüre UNION, Horizontal- Bohr- und Fräsmaschine und Bearbeitungszentrum der Baugröße 100 / 110 in Tischausführung der UNION Werkzeugmaschinen GmbH Chemnitz, Clemens-Winkler-Straße 5, D-09116 Chemnitz, Prospektcodierung T-TC 10-11-9d, geht ein Spindelstock mit der Hauptlagerung der Spindel hervor. Gemäß dieser Lösung ist auf der Spindel, die am Frontende eine Werkzeugaufnahme aufweist, eine Hülse gelagert. Die Hülse ist in einem Mantel mittels Wälzlagern angeordnet, wobei der die Spindel und die Hülse aufnehmende Mantel über einen Riemenantrieb angetrieben wird. Dazu ist ein Axialabschnitt des Mantels als Riemenscheibe ausgelegt, um den drei Riemen umlaufen. Die Riemen werden durch einen oberhalb der Bohrspindel in einem oberhalb des Spindelschlittens angeordneten Gehäuseteil aufgenommenen Antrieb angetrieben. Die Anordnung dieses Antriebs beansprucht erheblichen Bauraum und ist in Bezug auf die Rotationsgenauigkeit und die Außenrundheit des Mantels der Bohrspindel nicht vollkommen spielfrei.

Aus DE 28 45 968 A1 beziehungsweise DD 201 818 geht eine Anordnung von Funktionselementen einer Arbeitsspindel, insbesondere für eine Koordinatenbohrmaschine, hervor. Diese Lösung offenbart eine Arbeitsspindel, die insbesondere bei Koordinatenbohrmaschinen eingesetzt wird, die zur Realisierung hochgenauer rotatorischer und translatorischer Bewegungen in mindestens zwei im Gehäuse angeordneten statischen Mehrtaschenlagern oder in anderer Weise ausgebildeten Lagern drehbar und axial verschiebbar gelagert und geführt ist. Zur Übertragung der Rotations- und Translationsbewegung auf eine hohle Arbeitsspindel werden Funktionselemente eingesetzt. Diese umfassen eine Hohlwelle, eine Gewindehohlspindel sowie eine unverschiebbare Stange, die in die hohle Arbeitsspindel hineinragend angeordnet sind. Die Übertragung der Rotationsbewegung durch die teleskopartig in die hohle Arbeitsspindel hineinragende Hohlwelle erfolgt über Formschluss auf die hohle Arbeitsspindel. Die mit dem Hauptantrieb in Verbindung stehende Hohlwelle ist drehbar, jedoch axial unverschiebbar im Gehäuse gelagert. Die Übertragung der Translationsbewegung erfolgt durch die teleskopartig in die Hohlwelle hineinragende Gewindehohlspindel auf die hohle Arbeitsspindel. Das spindelkopfseitige Ende der Gewindehohlspindel ist über eine Axiallagerung drehbar, jedoch axial unverschiebbar mit der hohlen Arbeitsspindel verbunden. Der antriebsseitige Teil der Gewindehohlspindel greift in eine mit einem Nebenantrieb in Verbindung stehende, im Gehäuse drehbare, jedoch axial unverschiebbar gelagerte Mutter ein. Die Gewindehohlspindel selbst ist durch die wiederum teleskopartig in diese hineinragende, mit dem Gehäuse drehfest und unverschiebbar verbundene Stange über Formschluss gegen Verdrehung gesichert und axial verschiebbar geführt.

Gemäß der aus DE 28 45 968 A1 bekannten Lösung wird das Drehmoment des Hauptantriebes durch eine Hohlwelle übertragen, während die Vorschubkraft des Nebenantriebes über eine Gewindehohlspindel übertragen wird.

### Darstellung der Erfindung

Der vorliegenden Erfindung liegt die Aufgabe zugrunde, einen längsverstellbaren Funktionsblock bereitzustellen, in dem eine Werkzeugspindel, ein Werkzeugantrieb und ein mindestens einstufig ausgelegtes Getriebe in kompakt bauender Bauform angeordnet sind und welcher sich vor allem durch eine hohe Laufruhe, Spielarmut und konstante Verdrehsteifigkeit auszeichnet.

Erfindungsgemäß wird diese Aufgabe durch die Merkmale des unabhängigen Anspruches 1 gelöst.

Der erfindungsgemäß vorgeschlagenen Lösung folgend ist in einen beispielsweise in horizontale Richtung verfahrbaren Spindelschlitten, der seinerseits an einem in vertikale Richtung verfahrbaren Werkzeugschlitten aufgenommen sein kann, eine Bohrspindel integriert, welche eine Hohlwelle umfasst, die einen zylinderförmigen Elektroantrieb umschließt, dessen Abtrieb mit einem mindestens zweistufigen Planetengetriebe, zusammenwirkt. Das eingesetzte Planetengetriebe ist so aufgebaut, dass unter Verzicht auf ein allgemein bei Planetengetrieben übliches Sonnenrad, mindestens zwei, bevorzugt drei außenliegende Planetenradwellen vorgesehen sind, an denen jeweils ein Planetenrad aufgenommen ist. Bei den Verzahnungen der außenliegend angeordneten mindestens zwei Planetenräder handelt es sich bevorzugt um solche, die schräg verzahnt sind und zur Erzielung einer hohen Laufruhe gehärtet und geschliffen sind.

Das eingesetzte Planetengetriebe ohne Sonnenrad lässt sich in mindestens zwei Übersetzungsstufen bewegen, wodurch mindestens zwei Rotationsgeschwindigkeiten der Werkzeugspindel erreicht werden können.

Die Verbindung zwischen dem Abtrieb des als Planetengetriebe ausgebildeten Getriebes der Werkzeugspindel ist durch eine Überlastsicherung dargestellt. Die Überlastsicherung ist bevorzugt als Schrumpfsitz zwischen der Werkzeugspindel und dem Abtrieb des Planetengetriebes gestaltet. Der Schrumpfsitz ist von einem Ring umgeben, dessen Außenflächen konisch oder ballig verlaufend ausgeführt sind. Auf der Außenumfangsfläche des den Schrumpfsitz umschließenden Ringes sind zwei ringförmige Bauelemente aufgenommen, deren Innenumfang korrespondierend zur Außenkontur des den Schrumpfsitz umgebenden Ringes ausgebildet ist. Die im Bereich der Überlastsicherung nebeneinander liegenden Ringe werden mittels Vorspannelementen gegeneinander vorgespannt, so dass die Überlastsicherung einerseits absolut spielfrei ausgebildet ist und andererseits ab Überschreiten eines durch die Vorspannung definierten Durchrutschmomentes eine Relativbewegung zwischen dem Abtrieb des Getriebes und der die Werkzeugaufnahme aufnehmenden Welle ermöglicht wird. In handhabungsmäßig besonders günstiger Weise ist der Spindelschlitten der Werkzeugspindel mit einer im Bereich der Überlastsicherung liegenden Zugangsöffnung versehen, so dass die Überlastsicherung von außen zugänglich ist. Ein schnelles Lösen der Überlastsicherung und ein Herausziehen der Werkzeugspindel von der Vorderseite her, senken die Rüstzeiten bei einem erforderlichen Auswechseln der Werkzeugspindel drastisch ab.

Die erfindungsgemäß vorgeschlagene, in einem horizontal verfahrbaren Spindelschlitten aufgenommene Werkzeugspindel zeichnet sich durch eine über ihren Querschnitt gesehen konstante Verdrehsteifigkeit im gesamten Verstellbereich, d. h. entlang ihres gesamten Ausfahrweges aus, ferner weist sie eine geschlossene Mantelfläche auf, was die Beschädigungsgefahr im Betrieb drastisch herabsetzt.

Bei der erfindungsgemäß vorgeschlagenen Lösung für die Werkzeugspindel eines Bearbeitungszentrums, welches bevorzugt im Rahmen der spanabhebenden Fertigung eingesetzt wird, ist das Getriebe, welches das Drehmoment des in der Regel elektrisch ausgeführten Antriebes an die Werkzeugspindel überträgt, so beschaffen, dass eine Leistungsverzweigung des Abtriebsmomentes des elektrischen Antriebes über mindestens zwei, bevorzugt drei Zahneingriffe an die Werkzeugspindel übertragen wird. Das eingesetzte Getriebe, über welches das Abtriebsmoment des elektrischen Antriebes auf die Werkzeugspindel übertragen wird, kann entweder so ausgeführt sein, dass es lediglich eine Übersetzungsstufe aufweist, wobei auf eine Schaltung verzichtet werden kann, oder das eingesetzte Getriebe kann beliebig viele Übersetzungsstufen aufweisen.

Die Anzahl der Übersetzungsstufen, d. h. die Drehzahl der Werkzeugspindel, kann am Getriebe über eine der Anzahl der gewünschten Übersetzungsstufen entsprechende Anzahl von Planetenrädern beziehungsweise Planetenritzeln, die auf Planetenwellen aufgenommen sind, vorgegeben werden. Daneben ist es selbstverständlich auch möglich, die Drehzahl der das Werkzeug aufnehmenden Werkzeugspindel am elektrischen Antrieb unmittelbar einzustellen und auf diese Weise vorzugeben. Die erfindungsgemäß vorgeschlagene Werkzeugspindel, die verfahrbar im Spindelschlitten geführt ist, weist an ihrer dem zu bearbeitenden Werkstück zuweisenden Stirnseite eine Werkzeugaufnahme auf. Alternativ kann an dieser Stirnseite auch ein Werkzeugaggregat, welches die Funktionalität der Werkzeugspindel hinsichtlich der Bearbeitungsebenen und Bearbeitungswinkel erweitert, aufgenommen sein. Medienleitungen, über die sowohl ein hydraulisches Medium, Druckluft, elektrische Leitungen und dergleichen an die Stirnseite des horizontal verfahrbaren Spindelschlittens geleitet werden können, sind in vorteilhafter Weise in das Innere des Spindelschlittens in einen Hohlraum zwischen der in horizontale Richtung verfahrbaren Werkzeugspindel und der Spindelschlitteninnenwand eingelassen, so dass diese vor Beschädigungen geschützt sind.

Die erfindungsgemäß vorgeschlagene Lösung bietet ein Höchstmaß an Spielarmut und durch den gewählten leistungsverzweigten Antrieb ist eine hohe Laufruhe bei konstanter Verdrehsteifigkeit während der Ausfahrbewegung der Werkzeugspindel aus dem Spindelschlitten gewährleistet.

### Zeichnung

Anhand der Zeichnung wird die Erfindung nachstehend eingehender beschrieben.

Es zeigt:
- Figur 1: eine aus dem Stand der Technik bekannte Anordnung einer Werkzeugspindel, die mit mindestens einer in Axialrichtung verlaufenden Längsnut zur Übertragung der Rotationsbewegung versehen ist, wobei der Rotations-antrieb außerhalb der Werkzeugspindel angeordnet ist,
- Figur 1.1: einen Schnitt durch die Werkzeugspindel gemäß der Darstellung in Figur 1,
- Figur 1.2: eine vergrößerte Darstellung der Geometrie der Längsnut entsprechend den Darstellungen in Figur 1 und Figur 1.1,
- Figur 2: eine schematische Darstellung des erfindungsgemäß vorgeschlagenen Bearbeitungszentrums mit horizontal verfahrbarem Spindelschlitten, aus dieser ausfahrender Werkzeugspindel sowie einem vertikal verfahrbaren Schlitten,
- Figur 2.1: eine Vorderansicht des Vertikalschlittens, der den horizontal verfahrbaren Spindelschlitten und die in diesem verfahrbar aufgenommene Werkzeugspindel umschließt,
- Figur 3: eine in vergrößertem Maßstab wiedergegebene Draufsicht auf den Vertikalschlitten nach der erfindungsgemäßen Lösung,
- Figur 4: einen Längsschnitt durch den erfindungsgemäßen Spindelschlitten,
- Figur 5: einen Querschnitt durch das die Werkzeugspindel mit dem innenliegenden elektrischen Antrieb koppelnde Getriebe gemäß Schnittverlauf gemäß der Schnittdarstellung V-V in Figur 4,
- Figur 6: eine detaillierte Darstellung des Getriebes gemäß Figur 4,
- Figur 7: den Schnittverlauf durch das Getriebe gemäß des in Figur 6 eingezeichneten Schnittverlaufes VII-VII und
- Figur 8: einen Schnittverlauf durch das Getriebe gemäß des in Figur 6 eingetragenen Schnittverlaufes VIII-VIII in einer Übersetzungsstufe.

### Ausführungsvarianten

Nachfolgend wird die Erfindung am Beispiel eines Bearbeitungszentrums beschrieben, welches einen an einer Führung, wie z. B. einer hydraulisch beschaffenen Führung, verfahrbaren Vertikalschlitten aufweist, an dem ein horizontal verfahrbarer Spindelschlitten aufgenommen ist. In diesem horizontal verfahrbaren Spindelschlitten ist eine Werkzeugspindel eingelassen. Daneben besteht die Möglichkeit, die erfindungsgemäß vorgeschlagene Lösung des Spindelschlittens mit integriertem Rotationsantrieb und aus dem Spindelschlitten ausfahrbarer Werkzeugspindel auch in vertikale Richtung anzuordnen.

Unter Werkzeugspindel wird nachfolgend eine Spindel verstanden, an deren Werkzeugaufnahme sowohl ein spanabhebendes Werkzeug, wie z. B. ein Bohrer oder ein Fräskopf einer Schleifscheibe oder dergleichen mehr, angebracht werden kann, als auch ein Aggregat, welches die Funktionalität der Werkzeugspindel dahingehend erweitert, dass ein am Aggregat aufgenommenes Werkzeug in verschiedenen Bearbeitungswinkeln und Bearbeitungsebenen verfahren werden kann, um die Funktionalität des damit ausgerüsteten Bearbeitungszentrums bedeutend zu erweitern.

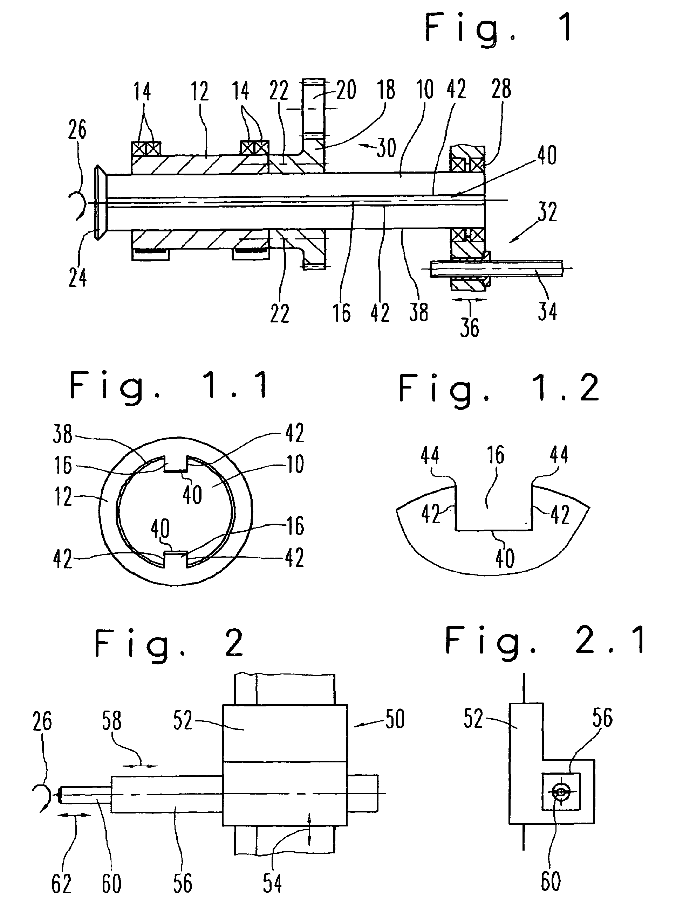

Zur Erläuterung des technischen Problems, welches bei bekannten Lösungen auftreten kann, sei auf die Figuren 1, 1.1 und 1.2 verwiesen.

Aus Figur 1 geht in schematischer Darstellung eine Spindel 10 hervor, die an ihrem ein Werkzeug 24 aufnehmenden Ende mit einer Hülse 12 versehen ist. Die Hülse 12 ist an ihrem Außenumfang in Wälzlagern 14 aufgenommen und über eine nur schematisch dargestellte Befestigung 22 mit einem getriebenen Zahnrad 18 verbunden. Über das getriebene Rad 18 wird das Drehmoment eines treibenden Rades 20, welches seinerseits von einem in Figur 1 nicht dargestellten Antrieb in Rotation versetzt wird, an die Hülse 12 übertragen. Die Hülse 12 ihrerseits überträgt das Drehmoment über eine Keil/Nutverbindung. Die korrespondierende Längsnut ist in Figur 1 durch Bezugszeichen 16 angedeutet. Durch diese Anordnung wird der Spindel 10 eine Rotation im Drehsinn 26 aufgeprägt. An ihrem dem Werkzeug 24 abgewandten Ende ist die Spindel 10 an einem Spindellager 28 gelagert. Während der Rotationsantrieb 30 der Spindel über die Zahnräder 18, 20 und die Hülse 12 in diese eingeleitet wird, erfolgt die Einleitung eines Axialvorschubes über das Spindellager 28, mit welchem ein Vorschubantrieb 32 gekoppelt ist. Der Vorschubantrieb umfasst eine Gewindespindel 34, deren Rotation in eine Vorschubbewegung 36 umgewandelt wird. Über das Spindellager 28 wird die Vorschubbewegung 36 auf die Spindel 10 übertragen. In Figur 1 bezeichnet das Bezugszeichen 40 die Längsnut 16. Die Längsnut 16 ist durch Nutflanken 42 und Nutkanten 44 begrenzt, siehe dazu die Figuren 1.1 und 1.2.

Der Darstellung gemäß Figur 1.1 ist ein Schnitt durch die Spindel gemäß Figur 1 zu entnehmen, wobei der Schnittverlauf durch die Hülse verläuft.

Aus der Darstellung gemäß Figur 1.1 geht hervor, dass die Hülse 12 zur Übertragung des empfangenen Drehmomentes an die Spindel 10 über mindestens zwei formschlüssige Verbindungen, die als Keil/Nutverbindungen ausgestaltet sind, mit der Spindel 10 verbunden ist. Aus der Darstellung gemäß Figur 1.1 geht hervor, dass am Umfang der Spindel 10 zwei einander gegenüberliegende Längsnuten 16 ausgebildet sind, die jeweils durch einen Nutboden 40 und zwei Nutflanken 42 begrenzt sind. Diese Verbindung stellt eine Formschlussverbindung dar, welche die Übertragung eines Drehmomentes durch die Hülse 12 ermöglicht.

Aus der Detaildarstellung gemäß Figur 1.2 geht hervor, dass die Nutflanken 42 der Längsnut 16 an der Umfangsfläche der Spindel 12 in Nutkanten 44 auslaufen. Hinsichtlich der Flächenpressung sind die Nutkanten 44 hohen Hertzschen Pressungen ausgesetzt, insbesondere beim Anfahren. Unter Anfahren wird eine Kollision des an der Spindel 10 aufgenommenen Werkzeuges 24 mit einem zu bearbeitenden Werkstück verstanden, was bei Lohnfertigern häufig auftritt und in der Regel unbeabsichtigt ist und auf einen zu hohen Vorschub der Bohrspindel 10 oder auf einen zu geringen Abstand des rotierenden Werkzeuges 24 zum zu bearbeitenden Werkstück zurückzuführen ist. Die beim "Anfahren" auftretenden Drehmomentstöße belasten die Antriebskomponenten, welche das Drehmoment auf die Spindel 10 übertragen, erheblich. Bei der Lösung gemäß der Figuren 1, 1.1 und 1.2 ist einerseits die Standzeit der gewählten Keil/Nutverbindung gemäß Figur 1.1 von Nachteil sowie das unvermeidliche Spiel, welches sich im Laufe der Zeit zwischen den Nutflanken 42 und den in die Längsnut 16 eingreifenden Keilen einstellt. Darüber hinaus haftet der Lösung gemäß der Figuren 1, 1.1 und 1.2 der Nachteil an, dass der Rotationsantrieb 30 in Bezug auf die Spindel 10 außenliegend angeordnet ist, was zusätzlichen Bauraum erfordert. Dies ist insofern von Bedeutung, als dass zwar der Vorschubantrieb 32 stationär gelagert werden kann, jedoch der die Spindel 10 antreibende Rotationsantrieb 30 stets mit der Spindel 10 mit verfahren werden muss, da das Werkzeug 24 an der dem Werkstück zuweisenden Stirnseite der Spindel 10 während der Bearbeitung stets in Rotation zu halten ist.

Ausgehend vom technischen Problem und den Nachteilen der Lösungen gemäß des Standes der Technik wird die erfindungsgemäß vorgeschlagene Lösung anhand der Figuren 2 bis 8 nachfolgend beschrieben.

Aus der Darstellung gemäß Figur 2 geht in schematischer Weise der Aufbau eines Bearbeitungszentrums im Bereich von Schlittenführungen hervor.

Der schematischen Darstellung gemäß Figur 2 lässt sich entnehmen, dass ein Bearbeitungszentrum 50 zumindest einen in Vertikalrichtung 54 verfahrbaren Vertikalschlitten 52 aufweist. Der Vertikalschlitten 52 kann in hydraulisch ausgebildeten Führungen oder auch in Schienen geführt sein und wird entsprechend der gewünschten Bearbeitungsposition verfahren. Am Vertikalschlitten 52 ist ein Spindelschlitten 56 aufgenommen. Der Spindelschlitten 56 ist so ausgebildet, dass dieser in horizontale Richtung 58 sowohl in den Vertikalschlitten 52 einfahren als auch aus diesem ausfahren kann. Dadurch lässt sich eine Bearbeitung auch längerer Seiten von größeren Werkstücken in einem Arbeitsgang und in einer Aufspannung erreichen. In dem in Horizontalrichtung 58 verfahrbaren Spindelschlitten 56 ist darüber hinaus eine Werkzeugspindel 60 aufgenommen. In Bezug auf den in horizontaler Richtung 58 verfahrbaren Spindelschlitten 56 ist die Bohrspindel 60 ebenfalls in Horizontalrichtung 62 relativ zum Spindelschlitten 56 bewegbar. Über den nachstehend eingehender beschriebenen Antrieb wird die Werkzeugspindel 60 innerhalb des Spindelschlittens 56 in Rotation versetzt.

Figur 2.1 zeigt eine Seitenansicht der in Figur 2 dargestellten Schlittenkonfiguration an einem Bearbeitungszentrum.

Aus der Seitenansicht gemäß Figur 2.1 geht hervor, dass der Spindelschlitten 56 im Vertikalschlitten 52 geführt ist. Innerhalb des Spindelschlittens 56 wiederum ist die in Horizontalrichtung 62 ausfahrbare Werkzeugspindel 60 verfahrbar aufgenommen.

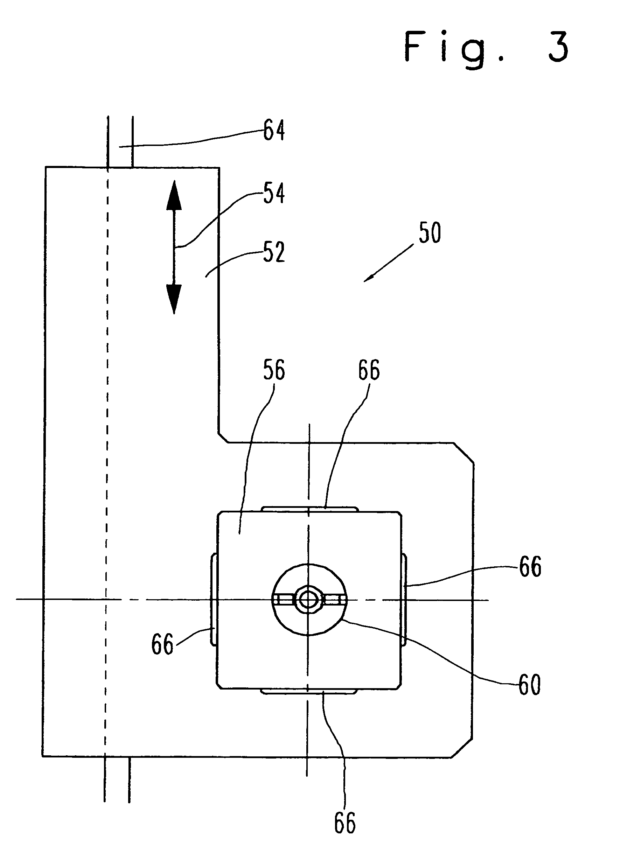

Die Darstellung gemäß Figur 3 entspricht einer im vergrößerten Maßstab wiedergegebenen Darstellung gemäß Figur 2.1.

Der Spindelschlitten 56, der in einer Führung 64 des Bearbeitungszentrums 50 gelagert ist, verfährt in vertikale Richtung 54. Im Vertikalschlitten 52 ist der Spindelschlitten 56 aufgenommen, der seinerseits die Werkzeugspindel 60 umschließt.

Der Spindelschlitten 56 fährt senkrecht zur Zeichenebene aus dem Vertikalschlitten 52 aus oder senkrecht zur Zeichenebene in den Vertikalschlitten 52 ein. An den vier Seiten des Spindelschlittens 56 sind taschenförmig konfigurierte Ausnehmungen 66 freigearbeitet.

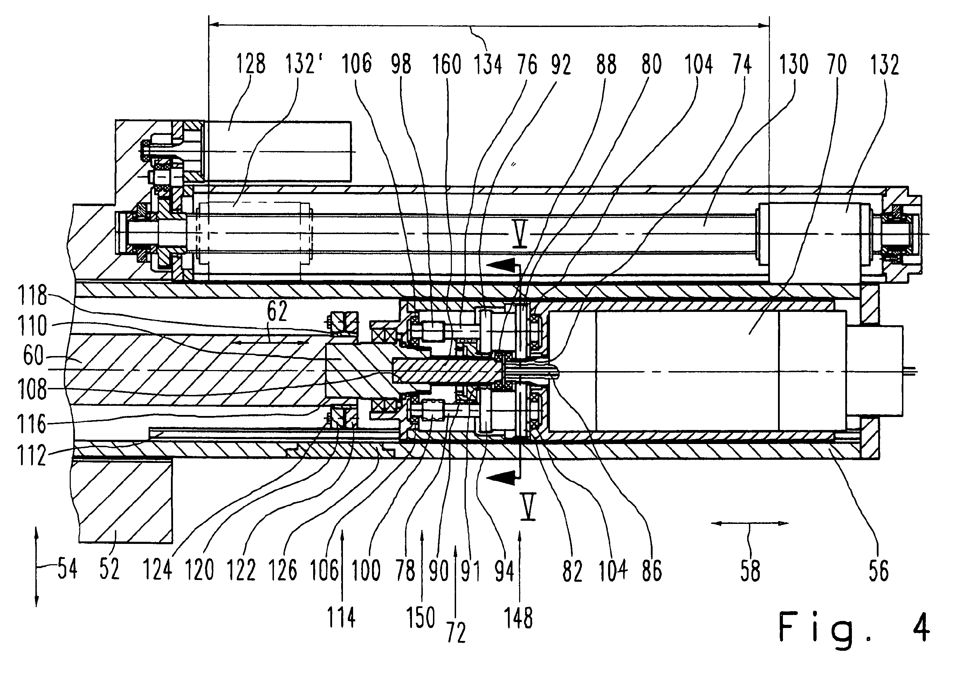

Figur 4 zeigt einen Längsschnitt durch den erfindungsgemäß vorgeschlagenen - in dieser Ausführungsvariante horizontal verfahrbaren - Spindelschlitten mit in diesen integriertem Getriebe und Rotationsantrieb.

Der Darstellung gemäß Figur 4 ist entnehmbar, dass ein Antrieb 70 zum Antrieb der Werkzeugspindel 60 in den in dieser Ausführungsvariante horizontal verfahrbaren Spindelschlitten 56 integriert ist. Der bevorzugt als Elektroantrieb ausgebildete Antrieb 70 ist zylindrisch ausgeführt und in einer Hülse im Innenraum des horizontal verfahrbaren Spindelschlittens 56 gelagert. Ein erster Abtriebsritzel 74 des Antriebes 70 ragt in ein Gehäuse eines als Planetengetriebe ohne Sonnenrad ausgeführten Getriebes 72. Das Getriebe 72 ist ebenfalls innerhalb des Spindelschlittens 56 angeordnet. Sowohl der Antrieb 70 als auch das Getriebe 72 sind im Inneren des Spindelschlittens 56 in horizontale Richtung verfahrbar, so dass die mit der Abtriebsseite des Getriebes 72 über eine Überlastsicherung 114 gekoppelte Werkzeugspindel 60 in horizontale Richtung 62 verfahrbar ist, d. h. aus dem Inneren des Spindelschlittens 56 - wie in Figur 2 dargestellt - ausfahren kann. Die Ausfahrlänge der Werkzeugspindel 60 aus dem Inneren des Spindelschlittens 56 hängt von der Axiallänge des Spindelschlittens 56 und von der Steifigkeit des Spindelschlittens 56 ab. Das erste Abtriebsritzel 74 kämmt in einer ersten Übersetzungsstufe 148 des Getriebes 72 als auch in einer weiteren Übersetzungsstufe 150 mit mindestens einem ersten Planetenrad 80 und einem zweiten Planetenrad 82. Bevorzugt weist das als Planetengetriebe ohne Sonnenrad ausgeführte Getriebe 72 ein drittes Planetenrad auf, welches in der Darstellung gemäß Figur 4 aus Gründen der besseren Darstellbarkeit nicht wiedergegeben ist. Das erste Planetenrad 80 ist auf einer ersten Planetenradwelle 76 aufgenommen, während sich das zweite Planetenrad 82 auf einer zweiten Planetenradwelle 78 befindet. Sowohl das erste Planetenrad 80 als auch das zweite Planetenrad 82 als auch das nicht dargestellte dritte Planetenrad sind drehfest auf ihren jeweiligen Planetenradwellen 76, 78 aufgenommen. Des Weiteren befinden sich auf den Planetenradwellen 76, 78 neben den Planetenrädern 80, 82 ein erstes Zwischenrad 92 und ein zweites Zwischenrad 94. Ein vorhandenes, doch in Figur 4 aus zeichnerischen Gründen ebenfalls nicht dargestelltes drittes Zwischenrad ist analog zum ersten Zwischenrad 92 und zum zweiten Zwischenrad 94 auf einer ebenfalls aus zeichnerischen Gründen nicht dargestellten dritten Planetenradwelle aufgenommen. Schließlich finden sich an der ersten Planetenradwelle 76 sowie der zweiten Planetenradwelle 78 ein erstes Planetenritzel 98 sowie ein zweites Planetenritzel 100. Ein drittes Planetenritzel ist aus zeichnerischen Gründen nicht dargestellt.

Die beiden in Figur 4 dargestellten Planetenradwellen 76 beziehungsweise 78 sind in Wälzlagern 104 einerseits im Gehäuse des Antriebes 70 drehbar gelagert und andererseits in Wälzlagern 106 in einem Gehäusedeckel des Getriebes 72 aufgenommen. Das Getriebe 72 umfasst des Weiteren ein in axiale Richtung verschiebbar angeordnetes zweites Abtriebsritzel 90, welches z. B. entlang einer Mehrkeilwelle axial verfahren werden kann.

Aus der Darstellung gemäß Figur 4 geht hervor, dass in den ersten und zweiten Übersetzungsstufen 148, 150 sowohl das erste Planetenrad 80 als auch das zweite Planetenrad 82 mit dem ersten Abtriebsritzel 74 des Antriebes 70 kämmen. In der ersten Übersetzungsstufe 148 verläuft der Abtrieb des Antriebes 70 ausgehend vom ersten Abtriebsritzel 74 über die mindestens zwei Planetenräder 80, 82 auf die Planetenradwellen 76, 78, von dort über die mindestens zwei Zwischenräder 92, 94 auf ein am zweiten Abtriebsritzel 90 in geringerem Durchmesser ausgebildetes Ritzel 91. Da das zweite Abtriebsritzel 90, welches in der ersten Übersetzungsstufe 148 außer Eingriff mit den Planetenrädern 80, 82 steht, und das Ritzel 91 auf einer Mehrkeilwelle aufgenommen sind, wird das Drehmoment über das Ritzel 91 auf die Mehrkeilwelle und über einen Wellenabschnitt an einen Presssitz 108 übertragen. Am Presssitz 108 stehen die die Mehrkeilwelle aufnehmende Welle und eine Getriebeabtriebswelle 110 miteinander kraftschlüssig in Verbindung. Die Übertragungswelle 110 ist in Lagern 112 aufgenommen.

Entsprechend des über die erste Übersetzungsstufe 148 erreichbaren Übersetzungsverhältnisses wird die Werkzeugspindel 60 angetrieben.

Darüber hinaus ist mit dem Getriebe 72 gemäß der Darstellung in Figur 4 eine weitere zweite Übersetzungsstufe 150 realisierbar, angedeutet durch den mit Bezugszeichen 150 versehenen, auf das erste Planetenritzel 98 und das zweite Planetenritzel 100 weisenden Pfeil.

Die zweite Übersetzungsstufe 150 wird dadurch erreicht, dass das zweite Abtriebsritzel 90, an dem das einen geringeren Teilkreisdurchmesser aufweisende Ritzel 91 ausgebildet ist, entlang der Keilwelle 160 in axialer Richtung verfahren werden kann. In der zweiten Übersetzungsstufe besteht ein Verzahnungseingriff zwischen dem zweiten Abtriebsritzel 90 und den an der ersten Planetenradwelle 76 und der zweiten Planetenradwelle 78 ausgeführten Planetenritzeln 98 beziehungsweise 100. Da das zweite Abtriebsritzel 90 samt Ritzel 91 in der zweiten Übersetzungsstufe 150 außer Eingriff mit den Zwischenrädern 92, 94 steht, wird das Drehmoment des Abtriebs 70 in der zweiten Übersetzungsstufe 150 ausgehend vom ersten Abtriebsritzel 74 über die mindestens zwei Planetenräder 82 an die mindestens zwei Planetenradwellen 76, 78 und von diesen über die mindestens zwei Planetenritzel 98, 100 an das axial verfahrbare zweite Abtriebsritzel 90 übertragen und über die Keilwelle 160 und den Presssitz 108 auf die Getriebeabtriebswelle 110 und von diesem über die Überlastsicherung 114 auf die anzutreibende und in horizontale Richtung 62 verfahrbare Werkzeugspindel 60 übertragen.

In Abwandlung des in Figur 4 dargestellten Getriebes 72, an welchem beispielhaft der Kraftfluss in der ersten Übersetzungsstufe 148 und in der zweiten Übersetzungsstufe 160 beschrieben wurde, können selbstverständlich je nach Anzahl der Planetenräder 80, 82, der Zwischenräder 92, 94 und der Planetenritzel 98 und 100 weitere Übersetzungsstufen ausgeführt werden, indem an den Planetenradwellen 76, 78 weitere, unterschiedliche Durchmesser aufweisende Zahnräder angeordnet werden.

Das in Figur 4 dargestellte und beschriebene Getriebe 72 stellt einen innenliegenden leistungsverzweigten rotatorischen Antrieb der Werkzeugspindel dar. Aus zeichnerischen Gründen sind in der Darstellung gemäß Figur 4 lediglich zwei Zahneingriffe in der ersten Übersetzungsstufe 148 zwischen dem ersten Abtriebsritzel 74 und dem ersten Planetenrad 80 und dem zweiten Planetenrad 82 dargestellt. Für die zweite Übersetzungsstufe 150 gilt analog, dass in diesem Falle das axial verschobene zweite Abtriebsritzel 90 mit Ritzel 91 mit den an der ersten Planetenradwelle 76 beziehungsweise der zweiten Planetenradwelle 78 angeordneten Planetenritzeln 98 und 100 steht. Das Getriebe 72 umfasst bevorzugt drei Planetenräder sowie drei Zwischenräder und drei Planetenritzel, die auf drei um 120° zueinander versetzt angeordneten Planetenradwellen aufgenommen sind. Dadurch wird ein Getriebe 72 erhalten, welches in Bezug auf das erste Abtriebsritzel 74 des Antriebes 70 drei Zahneingriffe realisiert, wodurch sich eine spielfreie Drehmomentübertragung erreichen lässt sowie eine hohe Laufruhe garantiert ist.

In vorteilhafter Weise sind der Abtrieb des Getriebes 72 und die Werkzeugspindel 60 über die Überlastsicherung 114 miteinander gekoppelt. Die Überlastsicherung 114 umfasst zum einen einen Schrumpfsitz 116 zwischen dem Ende der Werkzeugspindel 60 und dem diesen gegenüberliegenden Ende der Getriebeabtriebswelle 110. Im Bereich der Überlastsicherung 114 ist der Schrumpfsitz 116 zwischen den genannten Bauteilen 60 und 110 von einem Ring 118 umgriffen. Der Ring 118 ist an seiner Außenumfangsfläche bevorzugt mit Schrägflächen versehen. Dies erlaubt eine leichte Montage und Demontage eines ersten Spannrings 120 sowie eines weiteren Spannrings 122. Die Innenseiten der Spannringe 120, 122 sind bevorzugt komplementär zum Verlauf der Schräge des Außenumfangs des Rings 118 ausgeführt. Der erste Spannring 120 und der zweite Spannring 122 werden über Spannelemente 124 gegeneinander verspannt. Bei Aufbringen der Vorspannkraft, z. B. über Spannschrauben, die an den Umfängen der Spannringe 120, 122 gleichmäßig verteilt angeordnet sind, lässt sich eine definierte Kraft beziehungsweise ein definiertes Drehmoment einstellen, bei dessen Überschreiten die Überlastsicherung 114 anspricht, d. h. Getriebeabtriebswelle 110 durchrutscht. Die Schrägen am Außenumfang des Spannrings 118 werden bevorzugt komplementär zu den Schrägen der am Ring 118 zu befestigenden Spannringe 120 und 122 gestaltet. Im Falle eines "Anfahrens" spricht bei Überschreiten eines vorgebbaren wohldefinierten Drehmomentes die Überlastsicherung 114 an, so dass die Werkzeugspindel 60 in Bezug relativ zur Getriebeabtriebswelle 110 durchrutscht und das Getriebe 72 sowie der elektrische Antrieb 70 im Falle eines "Anfahrens" vor Beschädigungen wirksam geschützt sind. In besonders vorteilhafter Weise ist die Überlastsicherung 114 von der Außenseite des Spindelschlittens 56 zugänglich, so dass die Spannelemente 124, mit denen der erste Spannring 120 gegen den zweiten Spannring 122 beziehungsweise umgekehrt verspannt werden kann, sehr leicht zugänglich sind. Die einfache Zugänglichkeit der Überlastsicherung 114 durch mindestens eine Zugangsöffnung 126 reduziert zudem die Rüstzeiten nach einem "Anfahren" drastisch, so dass nach einem gegebenenfalls erforderlichen Auswechseln der Werkzeugspindel 60 die Produktion sehr rasch wieder aufgenommen werden kann, da sowohl die Demontage der Überlastsicherung 114 als auch die Montage der Überlastsicherung 114 sehr schnell und wenig zeitraubend durchführbar sind.

Aus der Darstellung gemäß Figur 4 geht des Weiteren hervor, dass der Spindelschlitten 56 einen Antrieb 128 zur Realisierung eines Axialvorschubs aufweist. Der Axialvorschub des Spindelschlittens 56 erfolgt entlang eines maximalen Vorschubweges, der in der Darstellung gemäß Figur 4 durch Bezugszeichen 134 kenntlich gemacht ist. Ein Antrieb 128 treibt über ein in Figur 4 nicht dargestelltes Getriebe eine Vorschubspindel 130 an. Auf der Vorschubspindel 130, die bevorzugt als Gewindespindel ausgeführt ist, verläuft ein Vorschubkörper 132, der mit dem Gehäuse des Spindelschlittens 56 fest verbunden ist. Mit Bezugszeichen 132 ist die Nullposition des Vorschubkörpers 132 bezeichnet. In dieser Position ist der Spindelschlitten in seiner eingefahrenen Lage, d. h. größtenteils in den Vertikalschlitten 52, eingefahren. In der mit Bezugszeichen 132' bezeichneten, in Figur 4 gestrichelt dargestellten Position befindet sich der Vorschubkörper 132 in seiner einen maximalen Vorschubweg 134 realisierenden Position. Selbstverständlich sind stufenlos zwischen den beiden dargestellten Positionen 132, 132' liegende Positionen durch den Antrieb 128 anfahrbar.

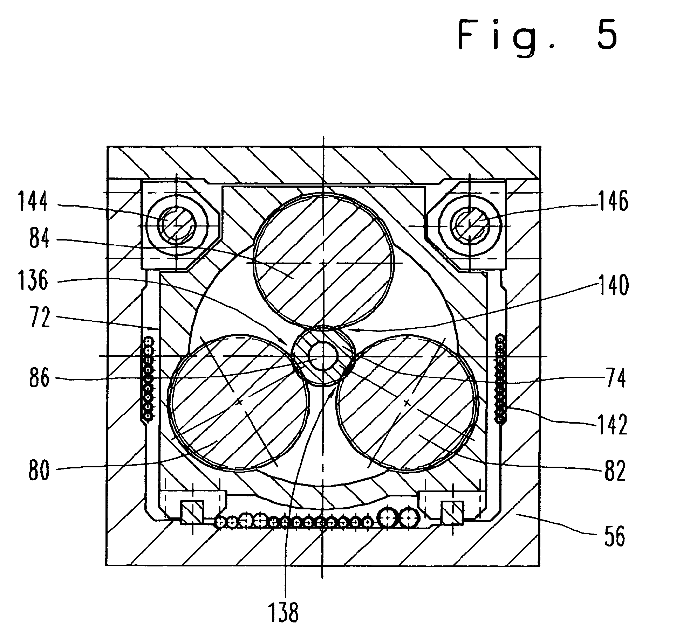

Aus der Darstellung gemäß Figur 5 geht ein Schnitt durch den Spindelschlitten gemäß des in Figur 4 dargestellten Schnittverlaufes V-V hervor.

Aus der Darstellung gemäß Figur 5 wird deutlich, dass das erste Abtriebsritzel 74 des Antriebes 70 sowohl mit dem ersten Planetenrad 80 als auch mit dem zweiten Planetenrad 82 sowie mit dem dritten Planetenrad 84 kämmt. Dies bedeutet, dass das Drehmoment des ersten Abtriebsritzels 74 über in Figur 5 dargestellte erste, zweite und dritte Zahneingriffe 136, 138 und 140 an die Planetenradwellen 76 und 78 (vergleiche Darstellung gemäß Figur 4, bis auf nicht dargestellte dritte Planetenradwellen) übertragen wird. Die in Figur 5 dargestellte Abtriebsanordnung des Getriebes 72 besteht in jeder der beiden im Zusammenhang mit Figur 4 erläuterten Übersetzungsstufen 148 beziehungsweise 150 sowie auch in weiteren Übersetzungsstufen. Durch die drei Zahneingriffe 136, 138 und 140 ist eine Leistungsverzweigung des Abtriebsdrehmomentes des Antriebes 70 gewährleistet, was zu einer hervorragenden Laufruhe und spielfreiem Lauf der Werkzeugspindel 60 beiträgt, unabhängig von der gewählten Übersetzungsstufe 148 beziehungsweise 150. Aus der in Figur 5 dargestellten Schnittzeichnung wird deutlich, dass über die drei Zahneingriffe 136, 138, 140 bei schräg verzahnt ausgeführten Planetenrädern 80, 82, 84 und erstem Antriebsritzel 74 sowie durch eine Härtung der Zahnflanken eine kompakt bauende Ausführung einer die Werkzeugspindel 60 antreibenden Motor/Getriebekonfiguration erreicht werden kann.

Figur 5 ist darüber hinaus zu entnehmen, dass Medienleitungen 142 am Boden oder an einer Seitenwand des horizontal verfahrbaren Spindelschlittens 56 verlaufen, wodurch die Medienleitungen 142 gegen Beschädigungen von der Außenseite her geschützt sind. Über Gewindespindeln 144, 146 erfolgt die Ausfahrbewegung der Werkzeugspindel 60 in horizontaler Richtung aus dem Spindelschlitten 56.

Wenngleich in Figur 5 nicht dargestellt, so wird ausdrücklich darauf verwiesen, dass die in Figur 5 zwischen den Planetenrädern 80, 82, 84 und dem ersten Abtriebsritzel 54 herrschenden drei Zahneingriffe 136, 138 und 140 auch an den weiteren Verzahnungskomponenten des bevorzugt sonnenradlosen Planetengetriebes 72 herrschen. So bestehen die im Zusammenhang mit den Planetenrädern 80, 82 und 84 erläuterten drei Zahneingriffe auch zwischen dem zweiten Abtriebsritzel 90, welches auf der Keilwelle 160 axial verschiebbar ist, für den Fall, dass dieses in der zweiten Übersetzungsstufe 150 mit den Planetenritzeln 98, 100 und dem nicht dargestellten dritten Planetenritzel kämmt. Analog kämmen in der ersten Übersetzungsstufe 148 die Zwischenräder 92, 94 und das in Figur 4 nicht dargestellte dritte Zwischenrad mit dem Ritzel 91, welches am axial verschiebbar auf der Mehrkeilwelle 160 aufgenommenen zweiten Abtriebsritzel 90 ausgebildet ist.

Somit ist sichergestellt, dass in jeder der in Zusammenhang mit Figur 4 beschriebenen Übersetzungsstufen 148 und 150 eine Übertragung des Drehmomentes des Antriebes 70 auf die Werkzeugspindel 70 über drei Zahneingriffe 136, 138 und 140 gleichzeitig erfolgt.

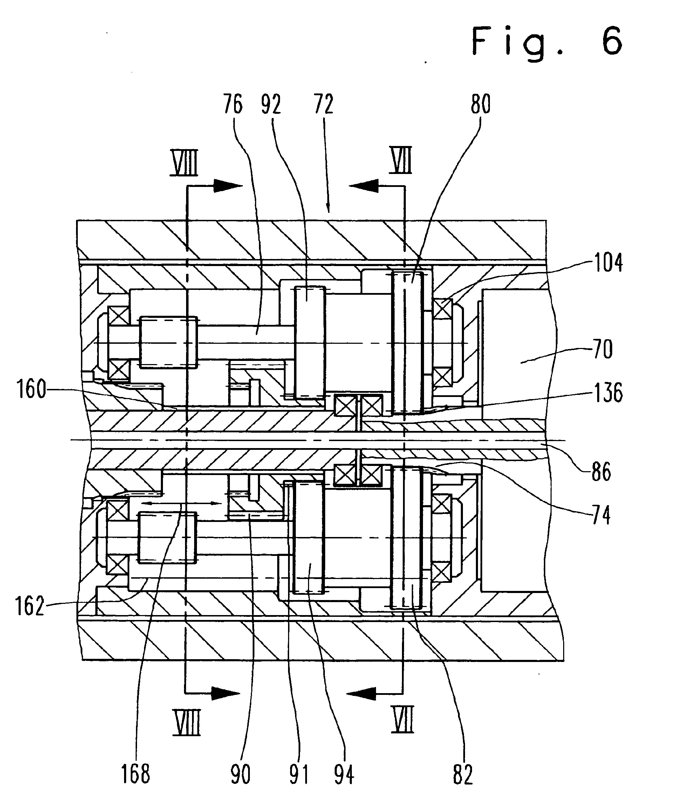

Der Darstellung gemäß Figur 6 ist eine Schnittdarstellung durch das Getriebe 72 in einer vergrößerten Darstellung zu entnehmen.

Aus der Darstellung gemäß Figur 6 geht hervor, dass der Antrieb 70 von einer Durchgangswelle 86, die als Keilwelle ausgebildet ist, durchsetzt ist. Auf der Durchgangswelle 86 wiederum ist die in Zusammenhang mit Figur 4 erläuterte Keilwelle 160 aufgenommen, auf der ihrerseits das zweite Abtriebsritzel 90 samt daran ausgeführtem Ritzel 91 in Axialrichtung verschiebbar aufgenommen sind. Der Axialverfahrweg des zweiten Abtriebsritzels 90 samt mit diesem verbundenen Ritzel 91 ist in der Darstellung gemäß Figur 6 durch den Doppelpfeil 168 bezeichnet.

Aus der Darstellung gemäß Figur 6 geht des Weiteren hervor, dass das erste Abtriebsritzel 74 des Antriebes 70 mit dem an der ersten Planetenradwelle 76 gelagerten ersten Planetenrad 80 kämmt. Der Zahneingriff ist mit Bezugszeichen 136 bezeichnet. Des Weiteren kämmt das erste Abtriebsritzel 74 des Antriebs 70 mit dem zweiten Planetenrad 82, angedeutet durch den mit 140 bezeichneten Zahneingriff. Das Drehmoment des Antriebes 70 wird demnach durch das erste Abtriebsritzel 74, das erste und das zweite Planetenrad 80, 82 auf die Planetenradwellen 76, 78 übertragen, von denen in der Schnittdarstellung gemäß Figur 6 lediglich die erste Planetenradwelle 76 dargestellt ist. Auf dieser ist das erste Zwischenrad 92 gelagert, welches mit dem am zweiten Abtriebsritzel 90 angebrachten Ritzel 91 kämmt. Gleiches gilt für das zweite Zwischenrad 94, welches gemäß der Darstellung in Figur 6 mit dem Ritzel 91 am zweiten Abtriebsritzel 90 kämmt. Das Getriebe 72 ist mit einem Schmierstoff befüllt, dessen Niveau im Gehäuse des Getriebes 72 durch das Bezugszeichen 162 angedeutet ist. In das Schmiermittel ragt z.B. der Umfang des zweiten Planetenrades 82 hinein, so dass der Schmierstoff über den Zahneingriff 140 an das erste Abtriebsritzel 74 und von diesem über den weiteren Zahneingriff 136 an das erste Planetenrad 80 übertragen wird.

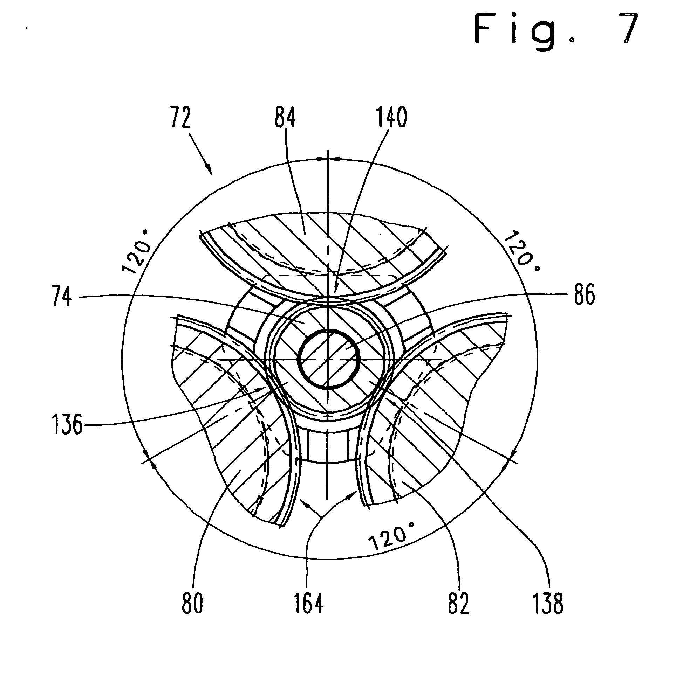

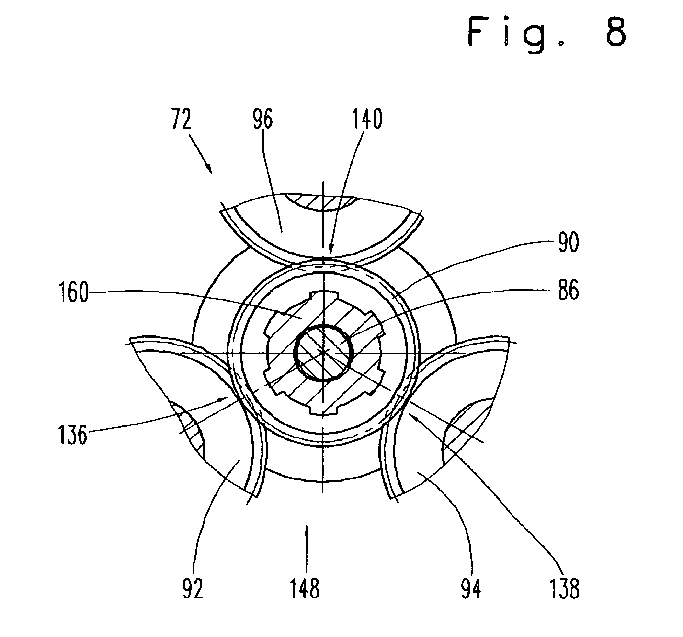

In Figur 6 sind ein Schnittverlauf VII-VII in der Ebene des ersten Planetenrades 80 und des zweiten Planetenrades 82 sowie ein weiterer Schnittverlauf VIII-VIII in der Ebene der Zwischenräder 92 und 94 eingezeichnet, die nachfolgend im Zusammenhang mit den Figuren 7 und 8 beschrieben werden.

Figur 7 zeigt einen Schnitt durch das Getriebe gemäß der Darstellung in Figur 6 nach Schnittverlauf VII-VII.

Die Darstellung gemäß Figur 7 zeigt, dass das Getriebe 72 im Bereich des ersten Abtriebsritzels 74 das erste Planetenrad 80, das zweite Planetenrad 82 sowie das dritte Planetenrad 84 aufweist. Aufgrund dieses Umstandes ergeben sich drei Zahneingriffe 136, 138, 140, über welche die vom Antrieb 70 auf das erste Abtriebsritzel 74 übertragene Leistung im Getriebe 72 verteilt wird. Die Zahneingriffe 136, 138 und 140 liegen - der Anordnung der Planetenräder 80, 82, 84 folgend - im Winkel von 120° versetzt zueinander. Bevorzugt sind die Planetenräder 80, 82 und 84 schräg verzahnt, was einerseits die effektive Flankenberührungsfläche während eines Zahneingriffes mit dem ersten Abtriebsritzel 74 verlängert und was des Weiteren die Laufruhe des Getriebes 72 positiv beeinflusst. Die Zahnflanken des ersten Abtriebsritzels 74 als auch der in Figur 7 dargestellten Planetenräder 80, 82 und 84 sind bevorzugt einsatzgehärtet und in einer sehr hohen Oberflächengüte ausgebildet. Dies gilt im Übrigen in gleicher Weise für die Zähne des Abtriebsritzels 90 mit daran ausgebildetem Ritzel 91, für die Zwischenräder 92, 94 und die auf den in Figur 4 dargestellten Planetenradwellen 76, 78 aufgenommenen Planetenritzel 98 und 100. Es wird ausdrücklich darauf hingewiesen, dass das Planetengetriebe 72 - wenn auch nicht in allen Figuren gezeigt - drei Planetenräder 80, 82, 84, drei Zwischenräder 92, 94, 96 sowie demzufolge drei Planetenradwellen und auf diesen aufgenommene drei Planetenritzel 98, 100, 102 aufweist.

Der Darstellung in Figur 8 ist ein Schnitt durch gemäß des Schnittverlaufes VIII-VIII in Figur 6 zu entnehmen.

Gemäß Figur 8 befinden sich die Zwischenräder 92, 94, 96 in Eingriff mit dem zweiten Abtriebsritzel 90, an dem - in Figur 8 aus zeichnerischen Gründen nicht dargestellt - das Ritzel 91 ausgeführt ist. Das in Axialrichtung 168 verschiebbare, auf der Keilwelle 160 gelagerte zweite Abtriebsritzel 90 kämmt, weist drei Zahneingriffe 136, 138 und 140 auf, so dass auch in dieser Schnittebene eine Leistungsverzweigung des vom Antrieb am ersten Abtriebsritzel 94 abgegebenen Drehmomentes erfolgt. Die Keilwelle 160 ist von der Durchgangswelle 86 (vergleiche Darstellung gemäß Figur 4 und Figur 6) durchsetzt. In der Darstellung gemäß Figur 8 umfasst die Keilwelle 160 sechs jeweils erhaben über ihren Umfang hervorstehende Keile, die in korrespondierend am axial verschiebbaren zweiten Abtriebsritzel 90 ausgebildete Längsnuten eingreifen. Je nach Anzahl der Übersetzungsstufen, in welche das Getriebe 72 geschaltet werden kann, sind eine dazu korrespondierende Anzahl von Planetenritzeln beziehungsweise Zwischenrädern im Getriebe 72 vorgesehen.

### Bezugszeichenliste

- 10: Spindel
- 12: Hülse
- 14: Wälzlager
- 16: Längsnut
- 18: getriebenes Rad
- 20: treibendes Rad
- 22: Drehmomentübertragung
- 24: Werkzeug
- 26: Drehsinn
- 28: Spindellager
- 30: Rotationsantrieb
- 32: Vorschubantrieb
- 34: Gewindespindel
- 36: Vorschubbewegung
- 38: Umfang Spindel
- 40: Nutgrund
- 42: Nutflanken
- 44: Nutkanten

- 50: Bearbeitungszentrum
- 52: Vertikalschlitten
- 54: Vertikalbewegung
- 56: Spindelschlitten
- 58: Horizontalbewegung
- 60: Werkzeugspindel
- 62: Horizontalbewegung Werkzeugspindel
- 64: Führung Vertikalschlitten
- 66: Taschen
- 68: Werkzeugaufnahme
- 70: Antrieb Werkzeugspindel
- 72: Getriebe
- 74: erstes Abtriebsritzel
- 76: erste Planetenradwelle
- 78: zweite Planetenradwelle
- 80: erstes Planetenrad
- 82: zweites Planetenrad
- 84: drittes Planetenrad
- 86: Durchgangswelle (Keil-, Mehrkeilwelle?)
- 88: Lager Durchgangswelle
- 90: zweites Abtriebsritzel
- 91: Ritzel
- 92: erstes Zwischenrad
- 94: zweites Zwischenrad
- 96: drittes Zwischenrad
- 98: erstes Planetenrad
- 100: zweites Planetenrad
- 102: drittes Planetenrad
- 104: Wälzlager erste Planetenradwelle
- 106: Wälzlager zweite Planetenradwelle
- 108: Presssitz
- 110: Getriebeabtriebswelle
- 112: Lager
- 114: Überlastsicherung
- 116: Schrumpfsitz
- 118: Ring
- 120: erster Spannring
- 122: zweiter Spannring
- 124: Spannelement
- 126: Zugangsöffnung Überlastsicherung
- 128: Antrieb Axialvorschub
- 130: Vorschub Spindel
- 132: Vorschub Körper
- 132': Maximalposition Vorschubkörper
- 134: maximaler Vorschubweg
- 136: erster Zahneingriff
- 138: zweiter Zahneingriff
- 140: dritter Zahneingriff
- 142: Medienleitungen
- 144: erste Gewindespindel
- 146: zweite Gewindespindel
- 148: erste Übersetzungsstufe
- 150: zweite Übersetzungsstufe
- 160: Keilwelle
- 162: Schmiermittelstand
- 164: Außenverzahnung
- 166: Keilnuten
- 168: Axialverfahrweg von 90, 91 auf Keilwelle 160

## Patentansprüche

1. Bearbeitungszentrum (50) zur spanabhebenden Bearbeitung von Werkstücken, mit einem Spindelschlitten (56), der in einem weiteren verfahrbaren Schlitten (52) verfahrbar aufgenommen ist und eine axial verfahrbare Werkzeugspindel (60) aufnimmt, die mittels eines Antriebs (70) in Rotationsrichtung (26) angetrieben und mittels eines Antriebes (128) axial verfahrbar ist und zwischen der Werkzeugspindel (60) und dem Antrieb (70) ein Getriebe (72) vorgesehen ist, **dadurch gekennzeichnet, dass** der rotatorische Antrieb (70), das Getriebe (72) und die Werkzeugspindel (60) eine bauliche Einheit bilden, die als solche im Inneren des Spindelschlittens (56) angeordnet und relativ zu diesem axial verfahrbar aufgenommen ist, wobei das Getriebe (72) als leistungsverzweigtes Planetengetriebe ausgeführt ist und mindestens eine, bevorzugt zwei Übertragungsstellen (136, 138) für das Antriebsmoment des Antriebes (70) aufweist.

2. Bearbeitungszentrum (50) gemäß Anspruch 1, **dadurch gekennzeichnet, dass** der weitere verfahrbare Schlitten (52) horizontal oder in vertikale Richtung (54) verfahrbar ist.

3. Bearbeitungszentrum (50) gemäß Anspruch 1, **dadurch gekennzeichnet, dass** das Getriebe (72) bevorzugt drei Übertragungsstellen (136, 138, 140) für das Antriebsmoment des Antriebes (70) aufweist.

4. Bearbeitungszentrum (50) gemäß Anspruch 1, **dadurch gekennzeichnet, dass** die mindestens eine Übertragungsstelle (136, 138) für das Antriebsmoment des Antriebes (70) Zahneingriffe von mindestens zwei Planetenrädern (80, 82) mit einem ersten Antriebsritzel (74) des Antriebes (70) sind.

5. Bearbeitungszentrum (50) gemäß Anspruch 1, **dadurch gekennzeichnet, dass** das leistungsverzweigte Planetengetriebe (72) sonnenradlos ausgeführt ist und mindestens zwei Übersetzungsstufen (148, 150) realisiert.

6. Bearbeitungszentrum (50) gemäß Anspruch 3, **dadurch gekennzeichnet, dass** die bevorzugten drei Übertragungsstellen (136, 138, 140) Zahneingriffe dreier Planetenräder (80, 82, 84) mit einem ersten Abtriebsritzel (74) des Antriebs (70) sind.

7. Bearbeitungszentrum (50) gemäß Anspruch 6, **dadurch gekennzeichnet, dass** die Übertragung der Antriebsleistung des Antriebes (70) in der ersten Übersetzungsstufe (148) vom ersten Abtriebsritzel (74) über die Planetenräder (80, 82, 84) und Zwischenräder (92, 94, 96) auf ein am zweiten Abtriebsritzel (90) ausgeführtes Ritzel (91) erfolgt.

8. Bearbeitungszentrum (50) gemäß Anspruch 6, **dadurch gekennzeichnet, dass** die Übertragung der Antriebsleistung des Antriebes (70) in der zweiten Übersetzungsstufe (150) vom ersten Abtriebsritzel (74) über die Planetenräder (80, 82, 84) und Planetenritzel (98, 100, 102) auf ein zweites Abtriebsritzel (90) erfolgt.

9. Bearbeitungszentrum (50) gemäß der Ansprüche 7 oder 8, **dadurch gekennzeichnet, dass** das zweite Abtriebsritzel (90) und das Ritzel (91) als ein Bauteil ausgeführt sind, welches auf einer Mehrkeilwelle (160) in Axialrichtung (168) verschiebbar ist.

10. Bearbeitungszentrum (50) gemäß Anspruch 1, **dadurch gekennzeichnet, dass** zwischen der Werkzeugspindel (60) und der Abtriebsseite des Getriebes (72) eine Überlastsicherung (114) angeordnet ist.

11. Bearbeitungszentrum (50) gemäß Anspruch 10, **dadurch gekennzeichnet, dass** die Überlastsicherung (114) über mindestens eine, entlang eines Horizontalverfahrweges (62) der Werkzeugspindel (60) am Spindelschlitten (56) ausgeführte Zugangsöffnung (126) zugänglich ist.

12. Bearbeitungszentrum (50) gemäß Anspruch 10, **dadurch gekennzeichnet, dass** die Überlastsicherung (114) als Schrumpfsitz (116) zwischen der Werkzeugspindel (60) und einem den Abtrieb des Getriebes (72) darstellenden Übertragungskörper (116) ausgeführt ist.

13. Bearbeitungszentrum (50) gemäß Anspruch 12, **dadurch gekennzeichnet, dass** die Überlastsicherung (114) einen den Schrumpfsitz (116) umschließenden Ring (118) umfasst, auf dem ein erster und ein zweiter Spannring (120, 122) mittels lösbarer Spannelemente (124) gegeneinander verspannt sind.

14. Bearbeitungszentrum (50) gemäß der Ansprüche 7 oder 8, **dadurch gekennzeichnet, dass** in der ersten Übersetzungsstufe (148) des Getriebes (72) drei Zahneingriffe (136, 138, 140) zwischen dem ersten Abtriebsritzel (74) und den Planetenrädern (80, 82, 84) und zwischen den Zwischenrädern (92, 94, 96) und dem Ritzel (91) vorliegen und in der zweiten Übersetzungsstufe (150) des Getriebes (72) drei Zahneingriffe (136, 138, 140) zwischen dem ersten Abtriebsritzel (74) und den Planetenrädern (80, 82, 84) und zwischen den Planetenritzeln (98, 100, 102) und dem zweiten Abtriebsritzel (90) vorliegen.

15. Bearbeitungszentrum (50) gemäß Anspruch 1, **dadurch gekennzeichnet, dass** Medienleitungen (142) im Inneren des Spindelschlittens (56) zu dessen werkstückseitiger Stirnseite verlaufen, an der eine Werkzeugaufnahme (68) vorgesehen ist, die zur Aufnahme eines Werkzeugs oder zur Aufnahme eines die Funktionalität der Werkzeugspindel (60) erweiternden Aggregates dient.

16. Bearbeitungszentrum (50) gemäß Anspruch 1, **dadurch gekennzeichnet, dass** der Spindelschlitten (56) über mindestens einen Vorschubantrieb (128) entlang seines Vorschubweges (134) zwischen einer Endposition eines Vorschubkörpers (132) und einer Maximalposition des Vorschubkörpers (132') stufenlos verfahrbar ist.

## Claims

1. Machining centre (50) for the machining of workpieces, with a spindle carriage (56) which is mounted traversably in a further traversable carriage (52) and accepts an axially traversable tool spindle (60) which is driven by means of a drive (70) in rotational direction (26) and is axially traversable by means of a drive (128) and a gearbox (72) is provided between the tool spindle (60) and the drive (70), **characterised by** the fact that the rotatory drive (70), the gearbox (72) and the tool spindle (60) constitute a structural unit which as such is arranged in the interior of the spindle carriage (56) and mounted axially traversable relatively to the latter, with the gearbox (72) being constructed as a load-sharing planetary gearbox and having at least one, preferably two transmission points (136, 138) for the driving torque of the drive (70).

2. Machining centre (50) according to Claim 1 **characterised by** the fact that the further traversable carriage (52) is traversable horizontally or in vertical direction (54).

3. Machining centre (50) according to Claim 1 **characterised by** the fact that the gearbox (72) has preferably three transmission points (136, 138, 140) for the driving torque of the drive (70).

4. Machining centre (50) according to Claim 1 **characterised by** the fact that the at least one transmission point (136, 138) for the driving torque of the drive (70) are meshings of at least two planet wheels (80, 82) with a first drive pinion (74) of the drive (70).

5. Machining centre (50) according to Claim 1 **characterised by** the fact that the load-sharing planetary gearbox (72) is constructed without a sun wheel and realises at least two transmission stages (148, 150).

6. Machining centre (50) according to Claim 3 **characterised by** the fact that the preferred three transmission points (136, 138, 140) are meshings of three planetary wheels (80, 82, 84) with a first output pinion (74) of the drive (70).

7. Machining centre (50) according to Claim 6 **characterised by** the fact that the driving power of the drive (70) is transmitted in the first transmission stage (148) from the first output pinion (74) via the planetary wheels (80, 82, 84) and intermediate wheels (92, 94, 96) to a pinion (91) provided on the second output pinion (90).

8. Machining centre (50) according to Claim 6 **characterised by** the fact that the driving power of the drive (70) is transmitted in the second transmission stage (150) from the first output pinion (74) via the planetary wheels (80, 82, 84) and planetary pinions (98, 100, 102) to a second output pinion (90).

9. Machining centre (50) according to claims 7 or 8 **characterised by** the fact that the second output pinion (90) and the pinion (91) are constructed as one component which is able to slide on a multisplined shaft (160) in axial direction (168).

10. Machining centre (50) according to Claim 1 **characterised by** the fact that an overload protection device (114) is arranged between the tool spindle (60) and the outside end of the gearbox (72).

11. Machining centre (50) according to Claim 10 **characterised by** the fact that the overload protection device (114) is accessible by at least one access opening (126) arranged along a horizontal travel path (62) of the tool spindle (60) on the spindle carriage (56).

12. Machining centre (50) according to Claim 10 **characterised by** the fact that the overload protection device (114) is realised as a shrink fit (116) between the tool spindle (60) and one of the transmission elements (116) constituting the output of the gearbox (72).

13. Machining centre (50) according to Claim 12 **characterised by** the fact that the overload protection device (114) comprises a ring (118) enclosing the shrink fit (116) and on which a first and a second clamping ring (120, 122) are clamped against one another by means of detachable clamping elements (124).

14. Machining centre (50) according to Claims 7 or 8 **characterised by** the fact that in the first transmission stage (148) of the gearbox (72) there are three meshings (136, 138, 140) between the first output pinion (74) and the planetary wheels (80, 82, 84) and between the intermediate wheels (92, 94, 96) and the pinion (91) and in the second transmission stage (150) of the gearbox (72) there are three meshings (136, 138, 140) between the first output pinion (74) and the planetary wheels (80, 82, 84) and between the planetary pinions (98, 100, 102) and the second output pinion (90).

15. Machining centre (50) according to Claim 1 **characterised by** the fact that service lines (142) inside the spindle carriage (56) run to the latter's workpiece-side end face on which a tool holder (68) is provided that is used to mount a tool or to mount a unit enhancing the functionality of the tool spindle (60).

16. Machining centre (50) according to Claim 1 **characterised by** the fact that the spindle carriage (56) is steplessly traversable by at least one feed drive (128) along a feedway (134) between an end position of a feed element (132) and a maximum position of the feed element (132').

## Revendications

1. Centre d'usinage (50) pour usinage par enlèvement de matière de pièces, avec un chariot porte-broche (56) logé de manière mobile dans un autre chariot mobile (52) et recevant une broche outil à déplacement axial (60) entraînée par un entraînement (70) dans le sens de rotation (26) et pouvant être déplacée dans le sens axial au moyen d'un entraînement (128) et un engrenage (72) prévu entre la broche outil (60) et l'entraînement (70), **caractérisé en ce que** l'entraînement rotatoire (70), l'engrenage (72) et la broche outil (60) forment une unité, disposée en tant que telle à l'intérieur du chariot porte-broche (56) et logée de manière à se déplacer dans le sens axial par rapport à ce chariot, l'engrenage (72) étant exécuté comme engrenage planétaire à branchement de couple et présentant au moins un, de préférence deux points de transfert (136, 138) pour le couple d'entraînement de l'entraînement (70).

2. Centre d'usinage (50) selon la revendication 1, **caractérisé en ce que** l'autre chariot mobile (52) peut se déplacer dans le sens horizontal ou vertical (54).

3. Centre d'usinage (50) selon la revendication 1, **caractérisé en ce que** l'engrenage (72) présente de préférence trois points de transfert (136, 138, 140) pour le couple d'entraînement de l'entraînement (70).

4. Centre d'usinage (50) selon la revendication 1, **caractérisé en ce que** le point de transfert minimal (136, 138) pour le couple d'entraînement de l'entraînement (70) consiste en l'engrènement d'au moins deux roues planétaires (80, 82) avec un premier pignon d'entraînement (74) de l'entraînement (70).

5. Centre d'usinage (50) selon la revendication 1, **caractérisé en ce que** l'engrenage planétaire à branchement de couple (72) est exécuté sans roue solaire et avec au moins deux rapports de transmission (148, 150).

6. Centre d'usinage (50) selon la revendication 3, **caractérisé en ce que** les trois points de transfert privilégiés (136, 138, 140) sont les engrènements de trois roues planétaires (80, 82, 84) avec un premier pignon de sortie (74) de l'entraînement (70).

7. Centre d'usinage (50) selon la revendication 6, **caractérisé en ce que** la transmission de la puissance d'entraînement de l'entraînement (70) au premier rapport de transmission (148) se fait du premier pignon de sortie (74) via les roues planétaires (80, 82, 84) et les roues intermédiaires (92, 94, 96) à un pignon (91) exécuté sur le deuxième pignon de sortie (90).

8. Centre d'usinage (50) selon la revendication 6, **caractérisé en ce que** la transmission de la puissance d'entraînement de l'entraînement (70) au deuxième rapport de transmission (150) se fait du premier pignon de sortie (74) via les roues planétaires (80, 82, 84) et les pignons planétaires (98, 100, 102) à un deuxième pignon de sortie (90).

9. Centre d'usinage (50) selon la revendication 7 ou 8, **caractérisé en ce que** le deuxième pignon de sortie (90) et le pignon (91) sont exécutés comme un composant pouvant être déplacé sur un arbre cannelé à cales multiples (160) dans le sens axial (168).

10. Centre d'usinage (50) selon la revendication 1, **caractérisé en ce qu'**une sécurité anti-surcharge (114) est disposée entre la broche outil (60) et le côté sortie de l'engrenage (72).

11. Centre d'usinage (50) selon la revendication 10, **caractérisé en ce que** la sécurité anti-surcharge (114) est accessible par au moins une ouverture d'accès (126) exécutée le long de la course horizontale (62) de la broche outil (60) sur le chariot porte-broche (56).

12. Centre d'usinage (50) selon la revendication 10, **caractérisé en ce que** la sécurité anti-surcharge (114) est exécutée comme siège fretté (116) entre la broche outil (60) et un corps de transfert (116) représentant la sortie de l'engrenage (72).

13. Centre d'usinage (50) selon la revendication 12, **caractérisé en ce que** la sécurité anti-surcharge (114) comprend un anneau (118) entourant le siège fretté (116) sur lequel anneau sont serrés un premier et un deuxième anneau de serrage (120, 122) l'un par rapport à l'autre au moyen d'éléments de serrage (124) pouvant être desserrés.

14. Centre d'usinage (50) selon la revendication 7 ou 8, **caractérisé en ce que**, au premier rapport de transmission (148) de l'engrenage (72), trois engrènements (136, 138, 140) sont présents entre le premier pignon de sortie (74) et les roues planétaires (80, 82, 84) et entre les roues intermédiaires (92, 94, 96) et le pignon (91) et **en ce que**, au deuxième rapport de transmission (150) de l'engrenage (72), trois engrènements (136, 138, 140) sont présents entre le premier pignon de sortie (74) et les roues planétaires (80, 82, 84) et entre les pignons planétaires (98, 100, 102) et le deuxième pignon de sortie (90).

15. Centre d'usinage (50) selon la revendication 1, **caractérisé en ce que** les conduites de fluide (142) passent à l'intérieur du chariot porte-broche (56) vers sa face avant côté pièce à usiner sur laquelle face un logement outil (68) est prévu, destiné à recevoir un outil ou un groupe d'extension de la fonctionnalité de la broche outil (60).

16. Centre d'usinage (50) selon la revendication 1, **caractérisé en ce que** le chariot porte-broche (56) peut être déplacé en continu via au moins un entraînement d'avance (128) le long de sa course d'avance (134) entre une position finale d'un corps d'avance (132) et une position maximale du corps d'avance (132').
